# EUROPEAN PATENT SPECIFICATION

(11) **EP 4 158 328 B1**
(45) Date of publication and mention of the grant of the patent: **17.12.2025**
(21) Application number: 21729919.7
(22) Date of filing: 27.05.2021
(51) Int. Cl.: G01N 27/622

(54) **ION SHUTTER CONTROL METHOD AND DETECTION APPARATUS**
VERFAHREN ZUR STEUERUNG EINES IONENVERSCHLUSSES UND DETEKTIONSGERÄT
PROCÉDÉ DE COMMANDE D'OBTURATEUR IONIQUE ET APPAREIL DE DÉTECTION

(30) Priority: 27.05.2020 GB 202007945
(43) Date of publication of application: 05.04.2023
(73) Proprietor: Smiths Detection-Watford Limited, Hemel Hempstead, Hertfordshire HP2 7DE (GB)
(72) Inventor: ARNOLD, Paul, Hemel Hempstead Hertfordshire HP2 7DE (GB); ATKINSON, Jonathan, Hemel Hempstead Hertfordshire HP2 7DE (GB); CLARK, Alastair, Hemel Hempstead Hertfordshire HP2 7DE (GB); HUMPHREYS, Elizabeth, Hemel Hempstead Hertfordshire HP2 7DE (GB)
(74) Representative: Leach, Sean Adam
(86) International application number: PCT/GB2021/051289
(87) International publication number: WO 2021/240158

(56) References cited:
- US-A- 3 626 181
- US-A1- 2004 119 012
- US-A1- 2008 142 699
- US-A1- 2013 306 859
- US-B1- 9 147 565

## Description

### Field of Invention

The present invention relates to methods and apparatus, and in particular methods and apparatus for analysing substances by detecting ions, and still more particularly to ion shutters for such apparatus and methods of controlling such ion shutters.

### Background

Ion mobility spectrometers (IMS) can identify material from a sample of interest by ionising the material (e.g., molecules, atoms, and so forth) and measuring the time it takes the resulting ions to travel a known distance under a known electric field. Typically this time is measured from the time an ion gate (which may also be referred to as an ion shutter) is opened, to the time that ion arrives at a detector such as a Faraday cup.

Each ion's time of flight is associated with the ion's mobility. An ion's mobility relates to its mass and geometry. Therefore, by measuring the time of flight of an ion it is possible to infer its identity. These times of flight may be displayed graphically or numerically as a spectrum.

As noted above, some IMS cells include detectors which collect ions to measure their time of flight so they can be identified, this may be done in the presence of a drift gas so that mobility effects can separate the ions. Some IMS cells may separate ions according to their time of flight so that ions having selected times of flight (implying a selected range of ion mobilities) can be provided to other detector instruments, such as mass spectrometers, for further analysis. One example of this technique is known as IMS-MS, in which an IMS cell is used as an ion filter to select ions from a sample. The selected ions are then provided to a mass spectrometer. In such ion identification or filtering methods, groups of ions can be released from a reaction region by opening an ion shutter and/or passed into an inlet of a mass spectrometer.

The reaction region of an IMS cell has a finite length, and in the time interval for which the shutter is held open, ions which may be distributed around the reaction region must travel (at least partially) across that reaction region to reach the shutter.

The opening of the shutter of a pulsed ionisation source IMS spectrometer is normally synchronized to the ion pulse generation. This synchronization includes the so called "gate delay" which occurs a fixed time after the ion pulse has been generated. This delay is required so that the ion pulse will be present at the shutter when it is opened.

An ion mass spectrometer is known from US 3 626 181 A. The ions produced in a drift cell in response to each ionisation source pulse p drift toward an electrode during the interval between that pulse and the next pulse p and become bunched in accordance with their drift velocity. When the ion gate is opened, at time f, it remains open until the next pulse p. Thus, all ions of drift velocity less than a predetermined value will be passed to an anode and will produce an output current. The output current is applied to an electrometer amplifier.

If the shift from closed to open condition of the ion gate is varied in time, it is possible to take the difference between the output current at two different delays (relative to pulses p) to obtain the output for a particular delay interval.

It is possible to operate a spectrometer without a shutter, or to hold the shutter open continuously. However, it has been found that the ungated corona generated pulse is broad and results in poor resolution.

### Summary

Aspects and examples of the present invention are set out in the claims and may vary the normally fixed gate delay to improve the response of the IMS to materials of interest.

For example, one problem which may be addressed by the present disclosure is that the gate delay selects which ions are admitted into the detector from any given pulse of an ionisation source. Due to mobility effects in the reaction region a shorter delay tends to allow more of the smaller, more mobile, ions into the drift region. On the other hand, a longer gate delay may promote admittance of ions of lower mobility into the drift region. The more mobile ions may comprise so called reactant ions, whereas the less mobile ions may comprise product ions.

To address this problem of mobility selection, the gate delay may be set so that both the reactant ion peak (RIP) and product ions will be visible in a typical sample spectrum. Such "middle ground" setting of the gate delay may exclude some of the product ions from entering the drift tube. Thus the apparent sensitivity of the detector to this type of ion will be reduced.

Embodiments of the present disclosure may aim to improve the apparent sensitivity of an IMS detector and to reduce the above-described problem of "mobility selection".

Other problems may also be addressed by the ion shutter control techniques discussed herein.

According to the invention, there is provided a method of operating an ion mobility spectrometer as set out in independent claim 1.

The second gate delay may be selected so that the portion of second sample ions comprises reactant ions in preference to product ions. The first gate delay may be longer than the second gate delay. The first gate delay may be selected so that the portion of first sample ions comprises product ions in preference to reactant ions.

These and other methods described herein may comprise obtaining ion spectrum data based on analysing at least one of (a) the portion of first sample ions and (b) the portion of second sample ions, thereby to control subsequent operation of an ion shutter of the ion mobility spectrometer based on said analysing of the at least one of (a) and (b).

Controlling subsequent operation of the ion shutter may comprise selecting a subsequent gate delay based on a product ion peak in the obtained ion spectrum data. For example - selecting the subsequent gate delay may comprise selecting a gate delay to increase the amplitude of the product ion peak, e.g. by choosing a gate delay which permits a greater number of ions having that range of mobilities to pass through the gate. It will be appreciated by the skilled addressee in the context of the present disclosure that whilst the precise time for an ion species to travel from the ion source to the gate cannot be analytically defined for all systems in general, for any given system it is possible empirically to determine a range of gate delays appropriate for increasing sensitivity to ions of a particular mobility.

Controlling subsequent operation of the ion shutter may comprise reducing a gate width during a gate delay interval associated with the product ion peak. In addition to or as an alternative to choosing gate delay for sensitivity to particular ion species which may be expected in a sample one or more of the gate delays used in a sequence of such delays may be chosen based on the mobility of a calibrant, e.g. to enhance a calibrant peak.

Drawing the sample of gaseous fluid may comprise operating a pressure pulser to draw the sample into the reaction region, wherein the first pulse of the ionisation source and the second pulse of the ionisation source are both performed prior to the next operation of the pressure pulser.

The methods described herein may comprise determining first ion spectrum data based on analysing the first sample ions;
determining second ion spectrum based on analysing the second sample ions; and
combining the first ion spectrum data and the second ion spectrum data to provide a combined spectrum for identifying a substance of interest in the sample of gaseous fluid.

The present invention also provides a detector according to independent claim 8.

The second gate delay may be selected so that the portion of second sample ions comprises reactant ions in preference to product ions. The first gate delay may be longer than the second gate delay. The first gate delay may be selected so that the portion of first sample ions comprises product ions in preference to reactant ions. The controller may be configured to obtain ion spectrum data based on analysing at least one of (a) the portion of first sample ions and (b) the portion of second sample ions. The controller may be configured to control subsequent operation of the ion shutter based on said analysing, for example it may be configured to select a subsequent gate delay based on the timing of a product ion peak in the obtained ion spectrum data. Selecting the subsequent gate delay comprises selecting a gate delay to increase sensitivity to the product ion peak (e.g. to increase the amplitude achievable at a given gate width). Controlling subsequent operation of the ion shutter may comprise reducing a gate width during a gate delay interval associated with the product ion peak.

At least one gate delay may be selected based on the mobility of a calibrant.

The detectors described herein may comprise a pressure pulser (e.g. an electromechanical actuator which drives a diaphragm in the manner of a loudspeaker). Such a pressure pulser may be arranged to provide samples of gaseous fluid from an inlet of the instrument into the reaction region. Drawing the sample of gaseous fluid comprises operating the pressure pulser to draw the sample into the reaction region - e.g. by providing temporary reductions of pressure in the reaction region. The controller may be configured so that after operating the pressure pulser to draw the sample into the reaction region the first pulse of the ionisation source and the second pulse of the ionisation source are both performed prior to the next operation of the pressure pulser.

The present invention further provides a method of configuring an ion mobility spectrometry apparatus according to independent claim 12.

It will be appreciated in the context of the present disclosure that such a controller may be connected for controlling a pulsed ionisation source and an ion shutter of the apparatus, and/or coupled to a detector of the apparatus for obtaining ion spectrum data and/or connected for controlling a pressure pulser of the apparatus for providing samples of gaseous fluid into the reaction region.

Finally, the present invention provides a computer program product according to independent claim 15.

Any feature of any one of the examples disclosed herein may be combined with any selected features of any of the other examples described herein. For example, features of methods may be implemented in suitably configured hardware, and the configuration of the specific hardware described herein may be employed in methods implemented using other hardware.

### Brief Description of Drawings

Embodiments of the disclosure will now be described in detail with reference to the accompanying drawings, in which:
Figure 1 shows a cut away view of an ion mobility spectrometer;
Figure 2 is a flow chart illustrating a method of operation of such an ion mobility spectrometer;
Figure 3 shows a schematic diagram of an example of an ion mobility spectrometer of the type illustrated in Figure 1;
Figure 4 is a timing diagram illustrating operation of such an ion mobility spectrometer to implement a method of the type indicated by Figure 2;
Figure 5 is a flow chart illustrating a method of operation such as that explained with reference to Figure 2 and/or Figure 4; and
Figure 6 is a flow chart illustrating a further such method of operation of an ion mobility spectrometer.

In the drawings like reference numerals are used to indicate like elements.

### Specific Description

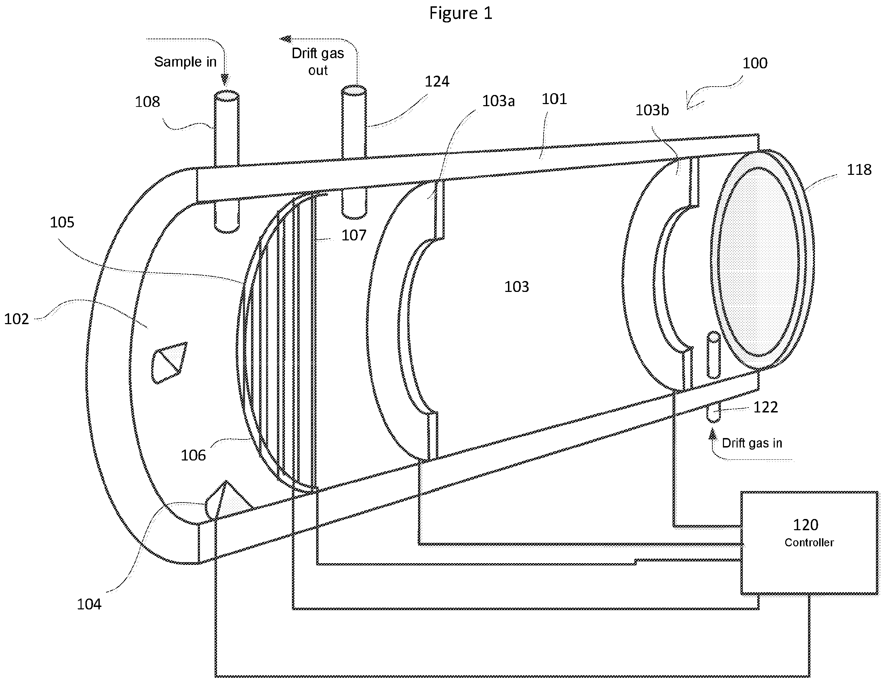

Figure 1 shows a cut away view of an ion mobility spectrometer, 100.

The ion mobility spectrometer of Figure 1 comprises a reaction region 102, a pulsed ionisation source 104 for ionising gaseous fluid in the reaction region 102, an ion shutter 105 and a controller 120.

The controller 120 is connected to the ionisation source 104 and to the shutter 105. In typical operation, each time a sample of gaseous fluid (such as vapour) is provided into the reaction region, the controller 120 provides a series of pulses of the ionisation source 104. Following each pulse the controller 120 opens the ion shutter 105 after a "gate delay", ions generated by that pulse then travel out of the reaction region along the drift region of the spectrometer to a detector such as a Faraday cup. Each pulse of operation of the ionisation source 104 can thus be used to provide an ion mobility spectrum. The series of spectra arising from the series of pulses applied to each sample are then combined to provide a spectrum for that sample.

The controller 120 illustrated in Figure 1 is configured to change the gate delay so that a different gate delay is used for at least one pulse of the series of pulses. An ion mobility spectrum produced by combining spectra produced using different gate delays reduces the problems which might otherwise be caused by "mobility selection".

The ion mobility spectrometry (IMS) cell as a whole will now be described, to put subsequent discussion of methods of addressing these and other issues properly into context.

The IMS cell comprises a housing, such as a tube 101. The reaction region 102 is at one end inside this housing 101, and separated from a detector 118 by a drift region 103. The reaction region 102 is separated from the drift region 103 by the ion shutter 105. The housing 101 comprises an inlet 108 for enabling a sample of gaseous fluid (such as vapour, and/or gas, and/or an aerosol) to be introduced into the reaction region 102.

The pulsed ionisation source 104 is arranged for ionising the sample in the reaction region. In the example illustrated in Figure 1, the pulsed ionisation source 104 comprises a corona point. The pulsed ionisation source 104 is connected so that the controller 120 can control the delivery of electrical energy to the controller 120, such as by switching on the supply of a pulse of electrical power. It will be appreciated in the context of the present disclosure that each pulse of operation of the ionisation source 104 may comprise a period during which a series of voltage spikes are applied across the electrodes of the ionisation source 104. For example, the ionisation source 104 may have some capacitance, so the delivery of a short DC pulse may give rise to some "ringing". Thus, the application of a pulse by the ionisation source 104 may comprise switching the ionisation source 104 from an 'off' state into an active state in which ions are generated, sometimes by a series of voltage spikes (e.g. generated by an AC voltage, which may be associated by such ringing) before the source is returned to an 'off' state.

The ion shutter 105 comprises two electrodes 106, 107, which are coupled to the controller 120 to enable a barrier voltage to be provided between the two electrodes 106, 107. When the shutter 105 is "closed" this barrier voltage acts to prevent ions from travelling from the reaction region into a drift region of the IMS, and an open state in which ions can travel into the drift region towards the detector. The ion shutter 105 may comprise a Tyndall-Powell, Bradbury-Nielsen shutter, or other type of shutter. The shutter electrodes 106, 107 may each comprise elongate conductors, and the elongate conductors of the first shutter electrode 106 may be aligned in the drift direction with the elongate conductors of the second shutter electrode 107. The elongate conductors of each shutter electrode 106, 107 may be arranged as a grid, such as a mesh, for example a triangular, rectangular, hexagonal, or other regular or irregular mesh. As will be explained later, the shutter electrodes 106, 107 need not be separated in the drift direction. For example they may be coplanar, in which case the elongate conductors may be interdigitated, for example they may be interleaved or interwoven.

In the example illustrated in Figure 1, the drift region 103 lies between the reaction region 102 and a detector 118 such as a collector, for example a Faraday cup for detecting the arrival of ions, or another type of a detector 118 such as a mass spectrometer. Where such another type of detector is used, an inlet of that detector may be used in place of the Faraday cup, and an additional ion shutter may be interposed between the drift region and the inlet of that detector. This can be used to select (e.g. filter) ions which are provided to that other detector according to their time of flight.

A voltage profile may be provided in the drift region 103 using a series of drift electrodes 103a, 103b spaced apart along the drift region. Although not illustrated in Figure 1, a repeller plate or other electrode may be arranged for extending this voltage profile into the reaction region 102. Between the reaction region 102 and the detector 118 the profile voltage varies spatially (e.g. as a function of displacement along the cell in the drift direction) to provide an electric field that moves ions along the cell 100 towards the detector 118. The electric field may be uniform and/or known along the drift region 103 and/or the reaction region 102.

The controller 120 comprises a programmable processor, an output interface such as a DAC (not shown in the drawings) which is able to control the provision of appropriate electrical control signals and/or power supply to the ion shutter and to the ionisation source 104. The controller 120 is thus operable to operate the pulsed ionisation source 104, and to control the ion shutter. The controller 120 may also store timing data indicating the gate delay associated with certain types of ion. For example, it may comprise data indicating the gate delay associated with preferentially selecting reactant ions and/or other types of ions such as a calibrant.

The IMS cell 100 illustrated in Figure 1 may also comprise a drift gas inlet 122 into the drift region near the detector, and a drift gas outlet near the shutter so that a flow of (cleaned, dried) drift gas can be provided against the direction of travel of the ions towards the detector.

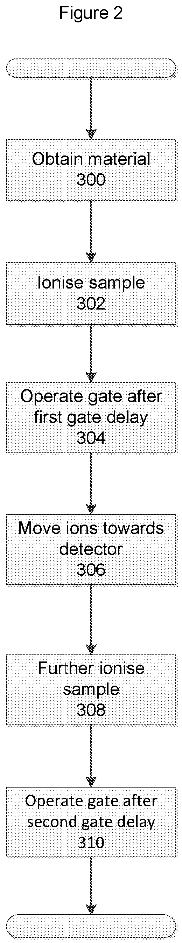

Operation of the IMS cell illustrated in Figure 1 will now be described with reference to Figure 2.

In operation, a sample of gaseous fluid such as vapour is provided 300 into the reaction region 102. The controller 120 then triggers the provision of electrical power to the pulsed ionisation source 104, which provides a pulse of ionising energy. Reactant ions, generated by this pulse of ionising energy are mixed 302 with the sample in the reaction region to create a cloud of product ions (e.g. ionised sample) and reactant ions.

After the ionisation source 104 has been operated the controller 120 waits for a selected time period (the first gate delay) before opening 304 the ion shutter. The gate delay may comprise the time between rising edge of the corona trigger and a predetermined point in the operation of the ion gate. The gate is held open for a period, generally referred to as the "gate width", before being closed again. Typically, the gate width is at least a microsecond, and may be less than 10ms. The gate widths which are used in practice may be selected based on the length of the drift chamber, and the degree of sensitivity required, and the desired timing resolution. For example for a drift tube 4cm in length a gate width of between 80 to 180 µs may be used.

Of the cloud of product ions and reactant ions generated by the first ionisation of the sample (which may be referred to herein as first sample ions), only that portion of ions which arrive at the gate during the gate width are allowed 306 to travel through the gate towards the detector. The more mobile ions, which arrive prior to opening of the shutter, and the less mobile ions which arrive after it has closed, are prevented from passing the gate (for example they may be neutralised at the shutter).

After the shutter has closed, the controller 120 then triggers the provision of electrical power to the pulsed ionisation source 104 for a second time which provides a pulse of ionising energy to further ionise 308 the sample which remains in the reaction region 102, left over from the previous operation of the ionisation source 104. This generates a further cloud of product ions and reactant ions (which may be referred to herein as second sample ions).

After the ionisation source 104 has been operated this second time, to further ionise the sample from which the first sample ions were derived, the controller 120 then waits for a selected time period to provide a second gate delay, different from the first gate delay, before opening 310 the ion shutter. Thus a portion of the second sample ions are selected to leave the reaction region during this second gate width, but because of the different gate delay the distribution of ion mobilities in that portion of ions will differ from that of the portion of the first sample ions, even though the first sample ions and the second sample ions were derived from the same sample. Accordingly, by using a series of different gate widths a better representation of the components of the sample can be obtained.

The controller 120 may be configured to implement a number of refinements of the approach described above.

As a first example, the controller 120 may be configured so that, of the two gate delay times, the longer delay is used for the first sample ions and the shorter delay is used for the second sample ions. This may help to address the problem that sample concentration in the reaction region tends to reduce over time as sample is carried away by the drift gas, or otherwise diffuses out of the reaction region. The portion of the first sample ions which is selected using the first (longer) gate delay may be obtained whilst the sample concentration in the reaction region is higher. This may improve sensitivity. Conversely, the second sample ions, selected using the second (shorter) gate delay may comprise relatively more reactant ions than the first sample ions. Thus the reactant ion peak can be obtained when sample has been depleted without loss of sensitivity to the sample ions. Different sequences of gate delays may be used.

As a further example, a selectable sequence of gate delays may be used. Thus after each intake of sample to the reaction region, a sequence of ionisation events may take place and for each ionisation event the gate may be opened and closed, thus providing a sequence of ionisation & gating events. In this sequence, the gate delay of each such event may be selected by the controller 120 e.g. according to pre-stored data. For example, the pre-stored data may comprise a set of sequences; each sequence adapted for detection of particular substances or for use in particular circumstances. Different types of sequences may be used, for example:
- sequences of increasing gate delays (as in the first example mentioned above) so that shorter gate delays follow the earlier ionisation events in the sequence, whereas progressively longer gate delays follow the subsequent operations of the ioniser, e.g. until the next intake of sample to the reaction region.
- sequences of decreasing gate delays so that longer gate delays follow the earlier ionisation events in the sequence, whereas progressively shorter gate delays follow the subsequent operations of the ioniser, e.g. until the next intake of sample to the reaction region.
- staggered (e.g. "oscillating") sequences of gate delays, wherein a gate delay of intermediate length follows the first ionisation event in the sequence, and a shorter delay follows the next ionisation event, and a longer delay (longer than the gate delay of intermediate length) follows a subsequent ionisation event.
- combinations of one or more of the preceding types of sequence.

Different sequences of the same type may also be stored, for example sequences of any of the above types and having one or more different absolute values of gate delay for use in detecting particular substances or in particular circumstances. The controller 120 may be configured to respond to user input and/or based on some sensed condition (such as temperature or humidity) to select one or more of the stored sequences from the pre-stored data. As one example, the pre-stored data may comprise a sequence for use in calibration, and a sequence for use in sampling.

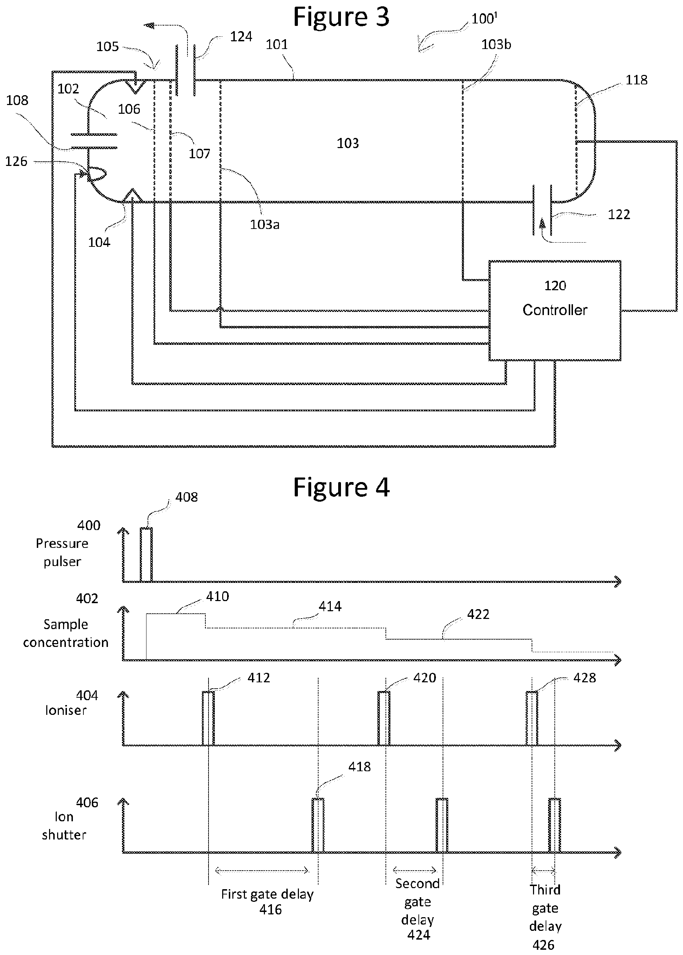

Figure 3 is a schematic diagram of an example of an ion mobility spectrometer of the type illustrated in Figure 1. As illustrated, the ion mobility spectrometer shown in Figure 3 is identical to that described with Figure 1 in that it comprises an ionisation source 104, a reaction region 102 separated from a drift region 103 by an ion shutter 105, and a controller 120 for controlling the ion shutter and the ionisation source 104. As with the IMS cell described with reference to Figure 1, the spectrometer illustrated in Figure 3 also comprises drift electrodes 103a, 103b for providing the electric field in the drift region 103. A drift gas inlet 122 is provided into the drift region 103 near the detector 118, and a drift gas outlet 124 near the shutter so that a flow of drift gas can be provided against the direction of travel of the ions towards the detector.

In addition to the features which are described with reference to Figure 1, the spectrometer illustrated in Figure 3 may also comprise a pressure pulser 126. Such a pressure pulser 126 may comprise a transducer, such as an electromechanical transducer, arranged in the manner of a miniature loudspeaker. Such a transducer may be operable to drive a diaphragm or other means for providing pulsed changes of pressure in the reaction region 102.

Figure 4 is a timing diagram comprising 4 pairs of axes. The first 400 illustrates the timing of operation of the pressure pulser, the second 402 illustrates the concentration of the sample in the reaction region, the third 404 illustrates the switching on and off of the pulsed ionisation source 104, and the fourth 406 illustrates operation of the gate.

The timing diagram shown in Figure 4 illustrates operation of an ion mobility spectrometer such as that illustrated in Figure 3. As shown, the pressure pulser 126 is operated 408 to draw a sample of gaseous fluid into the reaction region 102. This provides an initial sample concentration 410. The controller 120 then triggers 412 operation of the pulsed ionisation source 104. This generates reactant ions, which are then combined with the sample to ionise the sample generating the first sample ions. As shown, this reduces the sample concentration 414. As illustrated, the ion shutter 105 is held closed after the ionisation source 104 has been operated for a first gate delay 416. It is then opened for the "gate width" period 418 to allow a portion of the first sample ions to travel towards the detector 118, before being closed again. The ioniser is then operated again 420 to further ionise the sample remaining in the reaction region from the preceding operation of the ioniser. As shown this further reduces the sample concentration 422, and also generates the second sample ions.

Again, the shutter is held closed after the second operation 420 of the ionisation source 104 for the second gate delay 424, before it is opened to let a portion of the second sample ions travel towards the detector 118. The ion shutter is then closed again, and the cycle may be repeated - for example by operating the ioniser for a third time to still further ionise the remnants of the original sample, and generate third sample ions which may be analysed using a third gate delay 426. This cycle (operate ioniser, apply gate delay, open gate) may be repeated any number of times for each operation of the pressure pulser, so that each operation of the pressure pulser may be associated with a series of sets of ion mobility data, each obtained using a different gate delay.

For the avoidance of doubt, although the sample concentration is shown as being constant between the pulses 424, 426, 428 of ionisation source 104, it will be appreciated that the sample concentrations 410, 414, 422, generally also decrease over time as sample diffuses out of the reaction region and is carried away by bulk flow (e.g. in the drift gas).

The methods of operation illustrated in Figure 2 and Figure 4 may each be further developed in a variety of ways.

For example, the controller 120 may be configured to control the gate delay and/or the gate width of the ion shutter 105 based on ion spectrum data.

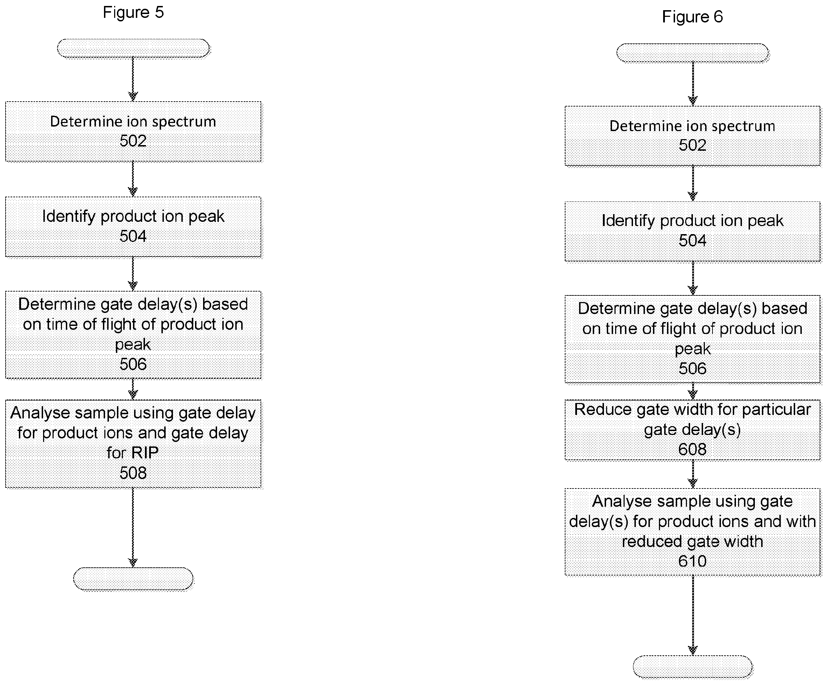

Figure 5 shows a flow chart illustrating one such example. As shown, in Figure 3 the detector 118 of the IMS cell illustrated in Figure 1 may also be connected to the controller 120. The controller 120 may thus obtain 502 ion spectrum data e.g. from the first and/or second sample ions. It may then determine whether peaks are present in the ion spectrum data, for example peaks associated with particular product ions and/or particular times of flight. As will be appreciated by the skilled practitioner having read the present disclosure, such peaks may be identified in the ion spectrum data by thresholding or other methods such as curve fitting (e.g. fitting a Gaussian). The controller 120 can thus obtain data indicating the time of flight of ions from the ion shutter to the detector, but other methods may be used.

The controller 120 may be configured to use such data to select a gate delay (or sequence of gate delays as defined above) e.g. based on the timing of one or more peaks and/or based on the detection of a particular substance or species of ion.

The time of arrival thus determined can then be used to determine at least one gate delay for subsequent analysis of the sample, or a subsequent sample e.g. according to a method such as that illustrated in Figure 2 or Figure 4.

Selecting the gate delay in this way, e.g. to match the expected time of arrival of particular product ions at the ion shutter, may increase the sensitivity of the IMS apparatus to those particular product ions - e.g. by increasing the amplitude of the product ion peak for a given sample concentration in the reaction region.

Figure 6 shows a further example of a way in which the methods of the present disclosure may be developed. The flow chart shown in Figure 6 illustrates a method of controlling operation of the ion shutter by reducing gate width during a gate delay interval which is associated with product ion peak. In this method, the controller 120 determines 502 an ion spectrum, and identifies 504 product ion peaks in that spectrum as explained above with reference to Figure 5. As also explained above, the controller 120 can use this data to determine 506 gate delays based on the expected times of arrival at the ion shutter of particular product ions associated with those peaks.

In the method illustrated in Figure 6, the controller 120 may then use a reduced gate width at the determined gate delay. It may also use a reduced gate width to scan through a series of such gate delays. For example, the controller 120 may identify a gate delay interval based on the expected times of arrival. This may be done using ion spectrum data determined using a first gate width (e.g. the default gate width for the instrument, which may be in a range such as one defined above e.g. between 1µs and 10ms. The controller 120 may then select a second shorter gate width and perform a series of cycles in which the selected gate delay(s) are used and the reduced gate width is used to scan across the identified gate delay interval.

This may be done according to the method illustrated in Figure 4, (e.g. cycles of operate ioniser, apply gate delay, open gate) but with a reduced gate width and in each cycle the gate delay may change. Such methods may be particularly useful because the gate delay may increase sensitivity to ions having a particular range of ion mobility, so that more ions in that range are admitted to the drift region. This in turn may allow a narrower gate width to be used to improve timing resolution whilst maintaining signal to noise ratio. The resultant, higher resolution ion mobility spectrum data may be used to resolve ambiguity in the product ion peaks.

It will be appreciated from the discussion above that the embodiments shown in the Figures are merely exemplary, and include features which may be generalised, removed or replaced as described herein and as set out in the claims. With reference to the drawings in general, it will be appreciated that schematic functional block diagrams are used to indicate functionality of systems and apparatus described herein. It will be appreciated however that the functionality need not be divided in this way, and should not be taken to imply any particular structure of hardware other than that described and claimed below. The function of one or more of the elements shown in the drawings may be further subdivided, and/or distributed throughout apparatus of the disclosure. In some embodiments the function of one or more elements shown in the drawings may be integrated into a single functional unit.

It will be appreciated in the context of the present disclosure that providing a pulse of a pulsed ionisation source may comprise delivering electrical energy to the ionisation source 120 to initiate operation of the ionisation source 104. It may also comprise switching the ionisation source off, and/or allowing it to return to a state in which ions are not generated until the next active delivery of energy to the ionisation source. For example, providing a pulse of a pulsed ionisation source may comprise both initiating and ending the supply of power to the ionisation source from a power source such as a battery and/or using a switch such as a relay. The ionisation source described herein may comprise a corona source, such as a corona point, in some examples the operation of the corona point source may comprise an electrical pulse of 12kV, having a rise time of about 150 ns and a pulse width of between 200 and 900 ns. A dielectric barrier discharge source may also be used, in which case operation of the ionisation source may comprise a pulse of approximately 10ms duration (e.g. based on the full width at half maximum of the pulse), and may comprise voltages of up to approximately 5 kV, for example peak voltages in the range 1kV to 4.5kV. The pulse may comprise an oscillatory component having a frequency which is characteristic of the DBD source and/or the electrical power supply to the DBD source. For example it may comprise a pulse of alternating voltage having a frequency of between 100Hz and 200 Hz, for example having a decay time of about 10 to 20 ms. The amplitude and time characteristics of pulses produced by DBD and corona sources may vary, but it will be appreciated in the context of the present disclosure that such pulses may comprise an oscillatory signal modulated by a pulse envelope.

The IMS cell typically employs a single high voltage power supply. The maximum voltage, e.g. at the top of the reaction region (the end furthest from the detector) may be resistively divided to provide the required voltage for each element of the IMS cell including the electrodes which define the electric field of the ionisation and drift regions and the electrodes of the ion gate/shutter. Where a corona source is used to generate ions this may have its own dedicated power supply which provides a fixed DC voltage and pulsed voltage which generates the ions. Instead of a high voltage power supply separate power supply units could be used for one or more elements of the IMS.

The above embodiments are to be understood as illustrative examples. Further embodiments are envisaged.

In an embodiment the present disclosure aims to reduce the effect of the above "mobility selection" by changing the gate delay so that product ion amplitudes are increased, but at the same time maintaining a consistent and useable RIP. To achieve this it is proposed to scan the gate delay through increasing values during the sampling period and then perform an average of the resulting peak amplitudes.

In embodiments it may be possible to tune the system to focus on to peaks of interest, actively during acquisition. E.g. if the sample peaks were persistent the gate delay could be automatically adjusted to maximize that peak. With the product peak maximized as described above, another adjustment could be carried out, that is to narrow the gate pulse width which may be useful in resolving any other peaks lying close to the peak of interest. One such approach is described with reference to Figure 6.

Embodiments of the disclosure aim to improve the IMS response to a product ion by active manipulation of the opening and closing of the ion gate. Embodiments can be implemented in any IMS system which uses a pulsed ion source, e.g. a corona discharge source, by a software modification. In some embodiments no hardware changes would be required. These and other embodiments could be included into portable IMS equipment which are being used in search scenarios. Embodiments may help to enable the detector to "focus" in on a compound of interest and help to reject false alarms.

In some examples the functionality of the controller 120 may be provided by a general purpose processor, which may be configured to perform a method according to any one of those described herein. In some examples the controller 120 may comprise digital logic, such as field programmable gate arrays, FPGA, application specific integrated circuits, ASIC, a digital signal processor, DSP, or by any other appropriate hardware. In some examples, one or more memory elements can store data and/or program instructions used to implement the operations described herein. Embodiments of the disclosure provide tangible, non-transitory storage media comprising program instructions operable to program a processor to perform any one or more of the methods described and/or claimed herein and/or to provide data processing apparatus as described and/or claimed herein. The controller 120 may comprise an analogue control circuit which provides at least a part of this control functionality. An embodiment provides an analogue control circuit configured to perform any one or more of the methods described herein.

## Claims

1. A method of operating an ion mobility spectrometer, the ion mobility spectrometer comprising a pulsed ionisation source (104), a reaction region (102) separated from a drift region (103) by an ion shutter (105), the method comprising:
drawing a sample of gaseous fluid into the reaction region (102) of the ion mobility spectrometer;
providing a first pulse of the pulsed ionisation source (104) to ionise the sample of gaseous fluid, thereby to obtain first sample ions;
after a first gate delay following the first pulse, opening the ion shutter (105) to permit a portion of the first sample ions to leave the reaction region and to enter the drift region (103);
providing a second pulse of the pulsed ionisation source to further ionise the sample of gaseous fluid, thereby to obtain second sample ions;
after a second gate delay following the second pulse, opening the ion shutter (105) to permit a portion of the second sample ions to leave the reaction region and enter the drift region (103), wherein the second gate delay is different from the first gate delay.

2. The method of claim 1 wherein the second gate delay is selected so that the portion of second sample ions comprises reactant ions in preference to product ions, for example wherein the first gate delay is longer than the second gate delay.

3. The method of claim 2 wherein the first gate delay is selected so that the portion of first sample ions comprises product ions in preference to reactant ions.

4. The method of any preceding claim comprising obtaining ion spectrum data based on analysing at least one of the portion of first sample ions and the portion of second sample ions and controlling subsequent operation of an ion shutter of the ion mobility spectrometer based on said analysing, for example wherein controlling subsequent operation of the ion shutter comprises selecting a subsequent gate delay based on a product ion peak in the ion spectrum data, for example wherein selecting the subsequent gate delay comprises selecting a gate delay to increase the amplitude of the product ion peak.

5. The method of claim 4 wherein controlling subsequent operation of the ion shutter comprises reducing a gate width during a gate delay interval associated with the product ion peak

6. The method of any of claims 1 to 5 wherein drawing the sample of gaseous fluid comprises operating a pressure pulser to draw the sample into the reaction region, wherein the first pulse of the ionisation source and the second pulse of the ionisation source are both performed prior to the next operation of the pressure pulser.

7. The method of any of claims 1 to 6 comprising:
determining first ion spectrum data based on analysing the first sample ions;
determining second ion spectrum based on analysing the second sample ions; and
combining the first ion spectrum data and the second ion spectrum data to provide a combined spectrum for identifying a substance of interest in the sample of gaseous fluid.

8. A detector instrument comprising:
a pulsed ionisation source (104) for ionising gaseous fluid in a reaction region (102) of the detector instrument; an ion shutter (105) and a drift region (103);
the reaction region (102) being separated from the drift region (103) by the ion shutter (105); and
a controller operable to:
operate the pulsed ionisation source to provide a first pulse to ionise a sample of gaseous fluid in the reaction region, thereby to obtain first sample ions;
control the ion shutter to provide a first gate delay between the operating of the ioniser and opening the ion shutter to permit a portion of the first sample ions to leave the reaction region and to enter the drift region (103);
operate the pulsed ionisation source to provide a second pulse to further ionise the sample of gaseous fluid in the reaction region, thereby to obtain second sample ions, and to
control the ion shutter to provide a second gate delay between the operating of the ioniser and opening the ion shutter to permit a portion of the second sample ions to leave the reaction region and to enter the drift region (103);
wherein the second gate delay is different from the first gate delay.

9. The instrument of claim 8 wherein the second gate delay is selected so that the portion of second sample ions comprises reactant ions in preference to product ions, for example wherein the first gate delay is longer than the second gate delay, for example wherein the first gate delay is selected so that the portion of first sample ions comprises product ions in preference to reactant ions, for example wherein the controller is configured to obtain ion spectrum data based on analysing at least one of the portion of first sample ions and the portion of second sample ions and to control subsequent operation of the ion shutter based on said analysing, for example wherein controlling subsequent operation of the ion shutter comprises selecting a subsequent gate delay based on a product ion peak in the ion spectrum data, for example wherein selecting the subsequent gate delay comprises selecting a gate delay to increase the amplitude of the product ion peak, for example wherein controlling subsequent operation of the ion shutter comprises reducing a gate width during a gate delay interval associated with the product ion peak

10. The instrument of claim 8 or 9 wherein at least one gate delay is selected based on the mobility of a calibrant.

11. The instrument of any of claims 8 to 10 comprising a pressure pulser arranged to provide samples of gaseous fluid from an inlet of the instrument into the reaction region,
wherein drawing the sample of gaseous fluid comprises operating the pressure pulser to draw the sample into the reaction region, and the controller is configured so that after operating the pressure pulser to draw the sample into the reaction region the first pulse of the ionisation source and the second pulse of the ionisation source are both performed prior to the next operation of the pressure pulser.

12. A method of configuring an ion mobility spectrometry apparatus of any of claims 8 to 11, the method comprising:
programming a controller of the apparatus to perform the method of any of claims 1 to 3,
wherein the controller is connected for controlling a pulsed ionisation source and an ion shutter of the apparatus.

13. The method of claim 12 comprising programming the controller to perform the method of claim 4 or 5,
wherein the controller is coupled to a detector of the apparatus for obtaining ion spectrum data.

14. The method of claim 12 or 13 comprising programming the controller to perform the method of claim 6 wherein the controller is connected for controlling a pressure pulser of the apparatus for providing samples of gaseous fluid into the reaction region.

15. A computer program product comprising program instructions for programming a controller of an ion mobility spectrometry apparatus of any of claims 8 to 11 thereby to perform the method of any of claims 1 to 7 or 12 to 14.

## Patentansprüche

1. Ein Verfahren zum Betreiben eines Ionenmobilitätsspektrometers, wobei das Ionenmobilitätsspektrometer eine gepulste Ionisationsquelle (104) umfasst, wobei eine Reaktionsregion (102) durch eine Ionenblende (105) von einer Driftregion (103) getrennt ist, wobei das Verfahren Folgendes umfasst:
Ziehen einer gasförmigen Fluidprobe in die Reaktionsregion (102) des Ionenmobilitätsspektrometers;
Bereitstellen eines ersten Pulses der gepulsten Ionisationsquelle (104), um die gasförmige Fluidprobe zu ionisieren, um somit erste Probenionen zu erhalten;
nach einer ersten Gatterverzögerung im Anschluss an den ersten Puls, Öffnen der Ionenblende (105), um es einem Anteil der ersten Probenionen zu ermöglichen, die Reaktionsregion zu verlassen und in die Driftregion (103) einzutreten;
Bereitstellen eines zweiten Pulses der gepulsten Ionisationsquelle, um die gasförmige Fluidprobe weiter zu ionisieren, um somit zweite Probenionen zu erhalten;
nach einer zweiten Gatterverzögerung im Anschluss an den zweiten Puls, Öffnen der Ionenblende (105), um es einem Anteil der zweiten Probenionen zu ermöglichen, die Reaktionsregion zu verlassen und in die Driftregion (103) einzutreten, wobei die zweite Gatterverzögerung verschieden von der ersten Gatterverzögerung ist.

2. Verfahren nach Anspruch 1, wobei die zweite Gatterverzögerung so gewählt ist, dass der Anteil der zweiten Probenionen Reaktandionen bevorzugt vor Produktionen umfasst, zum Beispiel wobei die erste Gatterverzögerung länger ist als die zweite Gatterverzögerung.

3. Verfahren nach Anspruch 2 wobei die erste Gatterverzögerung so gewählt ist, dass der Anteil der ersten Probenionen Produktionen bevorzugt vor Reaktandionen umfasst.

4. Verfahren nach einem der vorhergehenden Ansprüche, das das Erhalten von Ionenspektrumdaten umfasst, basierend auf dem Analysieren mindestens eines von dem Anteil der ersten Probenionen und dem Anteil der zweiten Probenionen und Steuern des nachfolgenden Betriebs einer Ionenblende des Ionenmobilitätsspektrometers basierend auf dem genannten Analysieren, zum Beispiel wobei das Steuern des nachfolgenden Betriebs der Ionenblende das Auswählen einer nachfolgenden Gatterverzögerung, basierend auf einem Produktionen-Peak in den Ionenspektrumdaten, umfasst, zum Beispiel wobei das Auswählen der nachfolgenden Gatterverzögerung das Auswählen einer Gatterverzögerung umfasst, um die Amplitude des Produktionen-Peaks zu erhöhen.

5. Verfahren nach Anspruch 4, wobei das Steuern des nachfolgenden Betriebs der Ionenblende das Reduzieren einer Gatterbreite während eines mit dem Produktionen-Peak assoziierten Gatterverzögerungsintervalls umfasst.

6. Verfahren nach einem der Ansprüche 1 bis 5, wobei das Ziehen der gasförmigen Fluidprobe das Betreiben eines Druckpulsgenerators umfasst, um die Probe in die Reaktionsregion zu ziehen, wobei der erste Puls der Ionisationsquelle und der zweite Puls der Ionisationsquelle beide vor dem nächsten Betrieb des Druckpulsgenerators durchgeführt werden.

7. Verfahren nach einem der Ansprüche 1 bis 6, das Folgendes umfasst:
Bestimmen von ersten Ionenspektrumdaten, basierend auf dem Analysieren der ersten Probenionen;
Bestimmen eines zweiten Ionenspektrums, basierend auf dem Analysieren der zweiten Probenionen; und
Kombinieren der ersten Ionenspektrumdaten und der zweiten Ionenspektrumdaten, um ein kombiniertes Spektrum zum Identifizieren einer Substanz von Interesse in der gasförmigen Fluidprobe bereitzustellen.

8. Ein Detektorinstrument, das Folgendes umfasst:
eine gepulste Ionisationsquelle (104) zum Ionisieren von gasförmigem Fluid in einer Reaktionsregion (102) des Detektorinstruments;
eine Ionenblende (105) und eine Driftregion (103);
wobei die Reaktionsregion (102) durch die Ionenblende (105) von der Driftregion (103) getrennt ist; und
eine Steuereinrichtung, die betriebsfähig ist zum:
Betreiben der gepulsten Ionisationsquelle, um einen ersten Puls bereitzustellen, um eine gasförmige Fluidprobe in der Reaktionsregion zu ionisieren, um somit erste Probenionen zu erhalten;
Steuern der Ionenblende, um eine erste Gatterverzögerung zwischen dem Betreiben des Ionisators und dem Öffnen der Ionenblende bereitzustellen, um es einem Anteil der ersten Probenionen zu ermöglichen, die Reaktionsregion zu verlassen und in die Driftregion (103) einzutreten;
Betreiben der gepulsten Ionisationsquelle, um einen zweiten Puls bereitzustellen, um die gasförmige Fluidprobe in der Reaktionsregion weiter zu ionisieren, um somit zweite Probenionen zu erhalten, und zum
Steuern der Ionenblende, um eine zweite Gatterverzögerung zwischen dem Betreiben des Ionisators und dem Öffnen der Ionenblende bereitzustellen, um es einem Anteil der zweiten Probenionen zu ermöglichen, die Reaktionsregion zu verlassen und in die Driftregion (103) einzutreten;
wobei die zweite Gatterverzögerung verschieden von der ersten Gatterverzögerung ist.

9. Instrument nach Anspruch 8, wobei die zweite Gatterverzögerung so gewählt ist, dass der Anteil der zweiten Probenionen Reaktandionen bevorzugt vor Produktionen umfasst, zum Beispiel wobei die erste Gatterverzögerung länger ist als die zweite Gatterverzögerung, zum Beispiel wobei die erste Gatterverzögerung so gewählt ist, dass der Anteil der ersten Probenionen Produktionen bevorzugt vor Reaktandionen umfasst, zum Beispiel wobei die Steuereinrichtung dazu ausgelegt ist, Ionenspektrumdaten zu erhalten, basierend auf dem Analysieren mindestens eines von dem Anteil der ersten Probenionen und dem Anteil der zweiten Probenionen, und den nachfolgenden Betrieb der Ionenblende zu steuern, basierend auf dem genannten Analysieren, zum Beispiel wobei das Steuern des nachfolgenden Betriebs der Ionenblende das Auswählen einer nachfolgenden Gatterverzögerung basierend auf einem Produktionen-Peak in den Ionenspektrumdaten umfasst, zum Beispiel wobei das Auswählen der nachfolgenden Gatterverzögerung das Auswählen einer Gatterverzögerung umfasst, um die Amplitude des Produktions-Peaks zu erhöhen, zum Beispiel wobei das Steuern des nachfolgenden Betriebs der Ionenblende das Reduzieren einer Gatterbreite während eines mit dem Produktionen-Peak assoziierten Gatterverzögerungsintervalls umfasst.

10. Instrument nach Anspruch 8 oder 9, wobei mindestens eine Gatterverzögerung basierend auf der Mobilität einer Kalibriersubstanz ausgewählt ist.

11. Instrument nach einem der Ansprüche 8 bis 10, das einen Druckpulsgenerator umfasst, der dazu eingerichtet ist, gasförmige Fluidproben aus einem Einlass des Instruments in die Reaktionsregion bereitzustellen,
wobei das Ziehen der gasförmigen Fluidprobe das Betreiben des Druckpulsgenerators umfasst, um die Probe in die Reaktionsregion zu ziehen, und wobei die Steuereinrichtung so ausgelegt ist, dass nach dem Betreiben des Druckpulsgenerators, um die Probe in die Reaktionsregion zu ziehen, der erste Puls der Ionisationsquelle und der zweite Puls der Ionisationsquelle beide vor dem nächsten Betrieb des Druckpulsgenerators durchgeführt werden.

12. Ein Verfahren zur Konfiguration einer Ionenmobilitätsspektrometrievorrichtung nach einem der Ansprüche 8 bis 11, wobei das Verfahren Folgendes umfasst:
Programmieren einer Steuereinrichtung der Vorrichtung, um das Verfahren nach einem der Ansprüche 1 bis 3 durchzuführen,
wobei die Steuereinrichtung zum Steuern einer gepulsten Ionisationsquelle und einer Ionenblende der Vorrichtung verbunden ist.

13. Verfahren nach Anspruch 12, das das Programmieren der Steuereinrichtung umfasst, um das Verfahren nach Anspruch 4 oder 5 durchzuführen,
wobei die Steuereinrichtung mit einem Detektor der Vorrichtung zum Erhalten von Ionenspektrumdaten gekoppelt ist.

14. Verfahren nach Anspruch 12 oder 13, das das Programmieren der Steuereinrichtung umfasst, um das Verfahren nach Anspruch 6 durchzuführen, wobei die Steuereinrichtung zum Steuern eines Druckpulsgenerators der Vorrichtung zum Bereitstellen von gasförmigen Fluidproben in die Reaktionsregion verbunden ist.

15. Ein Computerprogrammprodukt, das Programmanweisungen zum Programmieren einer Steuereinrichtung einer Ionenmobilitätsspektrometrievorrichtung nach einem der Ansprüche 8 bis 11 umfasst, um somit das Verfahren nach einem der Ansprüche 1 bis 7 oder 12 bis 14 durchzuführen.

## Revendications

1. Procédé de fonctionnement d'un spectromètre de mobilité ionique, le spectromètre de mobilité ionique comprenant une source d'ionisation pulsée (104), une zone de réaction (102) séparée d'une zone de dérive (103) par un obturateur ionique (105), le procédé comprenant :
l'introduction d'un échantillon de fluide gazeux dans la zone de réaction (102) du spectromètre de mobilité ionique ;
la production d'une première impulsion de la source d'ionisation pulsée (104) pour ioniser l'échantillon de fluide gazeux, afin d'obtenir ainsi des premiers ions échantillons ;
après un premier retard de porte suite à la première impulsion, l'ouverture de l'obturateur ionique (105) pour permettre à une partie des premiers ions échantillons de quitter la zone de réaction et de pénétrer dans la zone de dérive (103) ;
la production d'une deuxième impulsion de la source d'ionisation pulsée pour ioniser davantage l'échantillon de fluide gazeux, afin d'obtenir ainsi des deuxièmes ions échantillons ;
après un deuxième retard de porte suite à la deuxième impulsion,
l'ouverture de l'obturateur ionique (105) pour permettre à une partie des deuxièmes ions échantillons de quitter la zone de réaction et de pénétrer dans la zone de dérive (103), le deuxième retard de porte étant différent du premier retard de porte.

2. Procédé selon la revendication 1, dans lequel le deuxième retard de porte est sélectionné de telle sorte que la partie des deuxièmes ions échantillons comprenne des ions réactifs de préférence à des ions produits, par exemple dans lequel le premier retard de porte est plus long que le deuxième retard de porte.

3. Procédé selon la revendication 2, dans lequel le premier retard de porte est sélectionné de telle sorte que la partie des premiers ions échantillons comprenne des ions produits de préférence à des ions réactifs.

4. Procédé selon l'une quelconque des revendications précédentes, comprenant l'obtention de données de spectre ionique à partir d'une analyse d'au moins l'une de la partie des premiers ions échantillons et de la partie des deuxièmes ions échantillons et la commande du fonctionnement ultérieur d'un obturateur ionique du spectromètre de mobilité ionique en fonction de ladite analyse, par exemple dans lequel la commande du fonctionnement ultérieur de l'obturateur ionique comprend la sélection d'un retard de porte ultérieur en fonction d'un pic d'ions produits dans les données de spectre ionique, par exemple dans lequel la sélection du retard de porte ultérieur comprend la sélection d'un retard de porte pour augmenter l'amplitude du pic d'ions produits.

5. Procédé selon la revendication 4, dans lequel la commande du fonctionnement ultérieur de l'obturateur ionique comprend la réduction d'une largeur de porte durant un intervalle de retard de porte associé au pic d'ions produits.

6. Procédé selon l'une quelconque des revendications 1 à 5, dans lequel l'introduction de l'échantillon de fluide gazeux comprend l'actionnement d'un générateur d'impulsions de pression pour introduire l'échantillon dans la zone de réaction, la première impulsion de la source d'ionisation et la deuxième impulsion de la source d'ionisation étant toutes deux produites avant l'actionnement suivant du générateur d'impulsions de pression.

7. Procédé selon l'une quelconque des revendications 1 à 6, comprenant :
la détermination de premières données de spectre ionique à partir de l'analyse des premiers ions échantillons ;
la détermination du deuxième spectre ionique à partir de l'analyse des deuxièmes ions échantillons ; et
une combinaison des premières données de spectre ionique et des deuxièmes données de spectre ionique pour produire un spectre combiné permettant d'identifier une substance d'intérêt dans l'échantillon de fluide gazeux.

8. Instrument de détection comprenant :
une source d'ionisation pulsée (104) pour l'ionisation d'un fluide gazeux dans une zone de réaction (102) de l'instrument de détection ;
un obturateur ionique (105) et une zone de dérive (103) ;
la zone de réaction (102) étant séparée de la zone de dérive (103) par l'obturateur ionique (105) ; et
un dispositif de commande pouvant être utilisé pour :
actionner la source d'ionisation pulsée pour produire une première impulsion afin d'ioniser un échantillon de fluide gazeux dans la zone de réaction, afin d'obtenir ainsi des premiers ions échantillons ;
commander l'obturateur ionique pour produire un premier retard de porte entre l'actionnement de l'ioniseur et l'ouverture de l'obturateur ionique afin de permettre à une partie des premiers ions échantillons de quitter la zone de réaction et de pénétrer dans la zone de dérive (103) ;
actionner la source d'ionisation pulsée pour produire une deuxième impulsion afin d'ioniser davantage l'échantillon de fluide gazeux dans la zone de réaction, afin d'obtenir ainsi des deuxièmes ions échantillons, et pour
commander l'obturateur ionique pour produire un deuxième retard de porte entre l'actionnement de l'ioniseur et l'ouverture de l'obturateur ionique afin de permettre à une partie des deuxièmes ions échantillons de quitter la zone de réaction et de pénétrer dans la zone de dérive (103) ;
le deuxième retard de porte étant différent du premier retard de porte.

9. Instrument selon la revendication 8, dans lequel le deuxième retard de porte est sélectionné de telle sorte que la partie des deuxièmes ions échantillons comprenne des ions réactifs de préférence à des ions produits,
par exemple dans lequel le premier retard de porte est plus long que le deuxième retard de porte, par exemple dans lequel le premier retard de porte est sélectionné de telle sorte que la partie des premiers ions échantillons comprenne des ions produits de préférence à des ions réactifs, par exemple dans lequel le dispositif de commande est configuré pour obtenir des données de spectre ionique à partir d'une analyse d'au moins l'une de la partie des premiers ions échantillons et de la partie des deuxièmes ions échantillons et pour commander le fonctionnement ultérieur de l'obturateur ionique en fonction de ladite analyse,
par exemple dans lequel la commande du fonctionnement ultérieur de l'obturateur ionique comprend la sélection d'un retard de porte ultérieur en fonction d'un pic d'ions produits dans les données de spectre ionique,
par exemple dans lequel la sélection du retard de porte ultérieur comprend la sélection d'un retard de porte pour augmenter l'amplitude du pic d'ions produits,
par exemple dans lequel la commande du fonctionnement ultérieur de l'obturateur ionique comprend la réduction d'une largeur de porte durant un intervalle de retard de porte associé au pic d'ions produits.

10. Instrument selon la revendication 8 ou 9, dans lequel au moins un retard de porte est sélectionné en fonction de la mobilité d'une substance d'étalonnage.

11. Instrument selon l'une quelconque des revendications 8 à 10, comprenant un générateur d'impulsions de pression agencé pour introduire des échantillons de fluide gazeux dans la zone de réaction à partir d'une entrée de l'instrument,
dans lequel l'introduction de l'échantillon de fluide gazeux comprend l'actionnement du générateur d'impulsions de pression pour introduire l'échantillon dans la zone de réaction, et le dispositif de commande est configuré de telle sorte qu'après avoir actionné le générateur d'impulsions de pression pour introduire l'échantillon dans la zone de réaction, la première impulsion de la source d'ionisation et la deuxième impulsion de la source d'ionisation soient toutes deux produites avant l'actionnement suivant du générateur d'impulsions de pression.

12. Procédé de configuration d'un appareil de spectrométrie de mobilité ionique selon l'une quelconque des revendications 8 à 11,
le procédé comprenant :
la programmation d'un dispositif de commande de l'appareil pour exécuter le procédé selon l'une quelconque des revendications 1 à 3,
dans lequel le dispositif de commande est connecté pour commander une source d'ionisation pulsée et un obturateur ionique de l'appareil.

13. Procédé selon la revendication 12, comprenant la programmation du dispositif de commande pour exécuter le procédé selon la revendication 4 ou 5,
dans lequel le dispositif de commande est couplé à un détecteur de l'appareil pour obtenir des données de spectre ionique.

14. Procédé selon la revendication 12 ou 13, comprenant la programmation du dispositif de commande pour exécuter le procédé selon la revendication 6, le dispositif de commande étant connecté pour commander un générateur d'impulsions de pression de l'appareil afin d'introduire des échantillons de fluide gazeux dans la zone de réaction.

15. Produit sous forme de programme informatique comprenant des instructions de programme pour la programmation d'un dispositif de commande d'un appareil de spectrométrie de mobilité ionique selon l'une quelconque des revendications 8 à 11, afin d'exécuter ainsi le procédé selon l'une quelconque des revendications 1 à 7 ou 12 à 14.
